# FASCICULE DE BREVET EUROPEEN

(11) **EP 0 821 842 B1**
(45) Date de publication et mention de la délivrance du brevet: **20.06.2001**
(21) Numéro de dépôt: 96913604.3
(22) Date de dépôt: 18.04.1996
(51) Int. Cl.: H02H 3/33

(54) **DISPOSITIF DE PROTECTION DIFFERENTIELLE SENSIBLE AUX COURANTS PULSES**
AUF GEPULSTEM STROM ANSPRECHENDE FEHLERSTROMSCHUTZEINRICHTUNG
DIFFERENTIAL PROTECTION DEVICE SENSITIVE TO PULSATING CURRENT

(30) Priorité: 18.04.1995 FR 9504850
(43) Date de publication de la demande: 04.02.1998
(73) Titulaire: Schneider Electric Industries SA, 92500 Rueil-Malmaison (FR)
(72) Inventeur: BONNIAU, Michel, F-71640 Dracy-le-Fort (FR); PAUPERT, Marc, F-71100 Chalon-sur-Saône (FR)
(74) Mandataire: Ritzenthaler, Jacques
(86) Numéro de dépôt international: FR9600587
(87) Numéro de publication internationale: WO9633542

(56) Documents cités:
- EP-A- 0 044 999
- EP-A- 0 085 595
- EP-A- 0 484 698
- EP-A- 0 563 606
- EP-A- 0 697 704
- CH-A- 656 262
- DE-A- 3 911 480

## Description

La présente invention concerne un dispositif de protection différentielle d'une installation électrique, du genre comprenant un transformateur différentiel comportant un tore constitué par un noyau magnétique, des enroulements primaires formés par les conducteurs actifs de l'installation et un enroulement secondaire aux bornes duquel s'établit un signal de défaut différentiel lors de l'apparition d'un défaut différentiel dans les enroulements primaires, un relais de déclenchement d'un appareil de coupure de courant, et un circuit secondaire de connexion du relais aux bornes de l'enroulement secondaire précité, ledit circuit étant agencé pour provoquer le déclenchement lorsque ledit signal dépasse un seuil prédéterminé. Un tel dispositif est décrit dans le document EP-A-85595. Dans ce document, le dispositif de protection différentielle ne permet pas d'obtenir une sensibilité suffiseante aux courants pulsés.

Les déclencheurs par courant de défaut sont utilisés depuis de nombreuses années pour la protection des machines et des personnes. Pour la protection des personnes, le courant de déclenchement peut se situer environ à 30mA, tandis qu'il se situe dans une plage d'environ 300 à 500 mA pour la protection des machines.

Or, ces dernières années, on incorpore de plus en plus de dispositifs électroniques à effet redresseur du courant dans de nombreux appareils électriques. Ces effets redresseurs peuvent engendrer une composante continue susceptible d'influencer le fonctionnement du dispositif différentiel. L'utilisation accrue de déclencheurs électroniques, notamment dans les appareils ménagers requiert également que ceux-ci répondent en toute sécurité non seulement à des courants alternatifs, mais aussi à des courants de défaut continus pulsés. Les valeurs limites définies pour de tels déclencheurs ont été fixées par la norme VDE 0664. On connaît des déclencheurs du genre précédemment mentionné, et répondant à cette spécificité, dans lesquels le noyau magnétique du tore du transformateur est réalisé en un matériau cristallin adapté à cette utilisation. Les principales grandeurs caractéristiques de ces matériaux sont l'amplitude d'induction ^B pour un courant d'excitation sinusoïdal, l'élévation d'induction statique ΔB stat pour un courant d'excitation sinusoïdal redressé à une seul alternance ainsi que l'élévation d'induction dynamique ΔB dyn pour un courant d'excitation sinusoïdal redressé à deux alternances.

Dans ces déclencheurs, il est connu de monter un condensateur entre l'enroulement secondaire du transformateur et l'enroulement de déclenchement du relais afin d'augmenter la sensibilité du déclencheur en augmentant la puissance au niveau du relais. Un circuit oscillant est ainsi formé par l'enroulement secondaire et le condensateur. La fréquence de résonance de ce circuit oscillant doit alors être harmonisée avec la fréquence de la tension dans l'enroulement secondaire du fait du courant de défaut. Le réglage de ce circuit résonnant s'effectue en définissant le nombre de spires de l'enroulement secondaire en partant des valeurs de capacités prescrites pour le condensateur, et les conditions de déclenchement du déclencheur sont déterminées. Or, le nombre de spires définitivement réglé ne représente simplement qu'un compromis entre les différentes formes de courant de défaut.

La demande de brevet européen EP-0.563.606 décrit un transformateur d'intensité pour déclencheur, permettant d'obtenir une interruption sûre d'un circuit utilisateur soumis à des courants pulsés, le déclenchement étant réalisé de façon pratiquement indépendante de la forme de courant de défaut. Ces résultats sont obtenus grâce à l'utilisation d'un noyau magnétique réalisé en un matériau nanocristallin présentant les caractéristiques magnétiques suivantes : Br/Bs < 0, 3, DBdyn >0, 6T, pour une amplitude de l'intensité de champ de 100 mA/cm, DBdyn max > 0, 7T et DBdyn/ ^B > 0,7, ces noyaux magnétiques ayant été réalisé en deux étapes.

Les caractéristiques magnétiques présentées dans ce brevet sont effectivement intéressantes pour un schéma de déclencheur utilisant un condensateur. La présence de ce condensateur ainsi que l'obtention de DBdyn/ ^B (100 mA/cm) > 0, 7 permettent d'obtenir une forme de courant au secondaire plus symétrique. Dans ce cas, le déclencheur électromagnétique polarisé fonctionne pour deux seuils plus symétriques, d'où il résulte une plus grande facilité de réglage en fabrication. Or, si elles sont avantageuses, ces caractéristiques sont cependant contraignantes, car elles nécessitent un traitement particulier des matériaux du noyau magnétique.

En outre, dans ce brevet, le déclencheur ne permet pas l'obtention d'une protection différentielle efficace pour des applications courantes telles que les gradateurs pouvant avoir des angles d'ouverture très brefs allant de 135° à 180 °.

On connaît également le document DE-A-3911480 décrivant un dispositif de protection différentielle comportant un tore magnétique utilisant un matériau nanocristallin.
On connaît également un document intermédiaire EP-A-697704 dont la date de priorité est antérieure à la date de priorité de la présente demande mais qui a été publié après cette dernière date. Dans ce document, le circuit secondaire comporte un redresseur associé à un circuit résonant.

La présente invention résout ces problèmes et propose un dispositif de protection différentielle dont la sensibilité aux courants pulsés est améliorée sans caractéristiques magnétiques contraignantes pour le noyau magnétique du tore du transformateur et qui permette en outre de réaliser une protection élargie, en courants pulsés.
A cet effet, la présente invention a pour objet un dispositif de protection différentielle selon la revendication 1.
Selon une réalisation particulière de l'invention, le noyau magnétique est réalisé à partir d'un alliage à base de fer magnétique doux, composé à plus de 50% de grains à cristaux fins d'une taille inférieure à 100nm et contenant, en plus d'une teneur en fer supérieure à 60 % (at), 0,5 à 2 % de cuivre, 2 à 5 % au moins de l'un des métaux suivants niobium, tungstène, tantale, zirconium, hafnium, titane et/ou molybdène, 5 à 14 % de bore et 14 à 17 % de silicium.
Selon une caractéristique particulière, le redresseur précité comporte deux diodes reliant respectivement les deux extrémités de l'enroulement secondaire à l'une des extrémités de la bobine du relais tandis que l'autre extrémité de la bobine est reliée en un point milieu de l'enroulement secondaire.

Avantageusement, les deux diodes sont deux diodes Zener.
Selon une autre réalisation, le redresseur précité comporte un pont de diodes reliant les bornes de l'enroulement secondaire aux bornes de la bobine du relais.

Selon une caractéristique particulière, le circuit secondaire comporte en outre un condensateur monté en parallèle avec l'enroulement secondaire du tore.

Selon une autre caractéristique, le facteur de surtension du circuit secondaire est d'environ 3,5.

Selon une autre caractéristique, la fréquence de résonance du circuit résonnant comprenant l'enroulement secondaire du tore et le condensateur est d'environ 120 Hz.

Selon une caractéristique particulière, le circuit secondaire comporte en outre une capacité de stockage et des moyens de comparaison connectés à la capacité de stockage et comportant une sortie de contrôle reliée aux moyens de commande du relais, de manière à fournir un signal de déclenchement au relais si la valeur de la tension de la capacité est supérieure à un seuil prédéterminé.

Avantageusement, les moyens de comparaison comportent un comparateur oubien une diode à seuil de tension.

De préférence, les moyens de commande du relais comportent un thyristor.

Mais d'autres avantages et caractéristiques de l'invention apparaîtront mieux dans la description détaillée qui suit et se réfère aux dessins annexés donnés uniquement à titre d'exemple et dans lesquels :
La figure 1 est une courbe représentative de l'évolution des seuils de déclenchement pour un matériau cristallin et un matériau nanocristallin,
La figure 2 illustre un déclencheur comprenant un tore dont le noyau est réalisé en un matériau nanocristallin, et un circuit secondaire à redresseur.
Les figures 3 et 6 illustrent respectivement deux réalisations d'un déclencheur conforme à l'invention.
La figure 4 illustre deux courbes représentant en ordonnée, le facteur de surtension et en abcisse, le rapport C/C(50hz), respectivement pour un matériau cristallin et un matériau nanocristallin.
La figure 5 illustre la réduction relative des seuils en classe A, apportée par le nanocristallin comparativement au cristallin en fonction de l'angle d'amorçage.

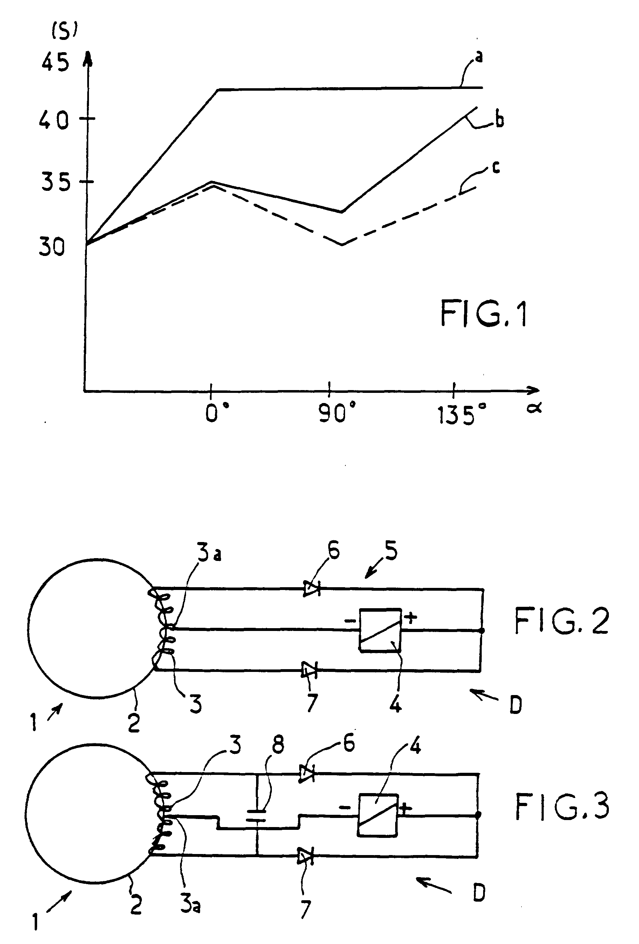

Sur les figures 2,3 et 6, on voit respectivement trois réalisations d'un dispositif de protection différentielle D destiné à être incorporé ou associé, par exemple à un disjoncteur électrique (non représenté) de coupure des conducteurs actifs alimentant une installation électrique. Ce dispositif D comporte communément aux trois réalisations, un transformateur différentiel 1 constitué par un tore 2 à noyau magnétique comportant un enroulement primaire (non représenté) formé par les conducteurs actifs de l'installation traversant le tore 2, et un enroulement secondaire 3 relié à la bobine d'un relais de déclenchement 4 du type polarisé, par un circuit secondaire 5 de connexion. Le noyau magnétique du tore 2 est réalisé en un matériau nanocristallin.

Le circuit secondaire 5 du déclencheur D représenté sur les figures 2 et 3 est constitué par deux diodes 6, 7 reliées en entrée respectivement aux deux extrémités de l'enroulement secondaire 3 et en sortie au pôle positif du relais de déclenchement 4, tandis que le pôle négatif du relais 4 est relié en un point milieu 3a de l'enroulement secondaire 3 du tore 2. Dans la réalisation illustrée sur la figure 3 conforme à l'invention, le circuit secondaire 5 comporte en outre un condensateur 8 monté en parallèle de l'enroulement secondaire 3 du tore 2. On notera que des diodes zener ou autres dispositifs équivalents seront avantageusement utilisés pour éviter les déclenchements intempestifs.

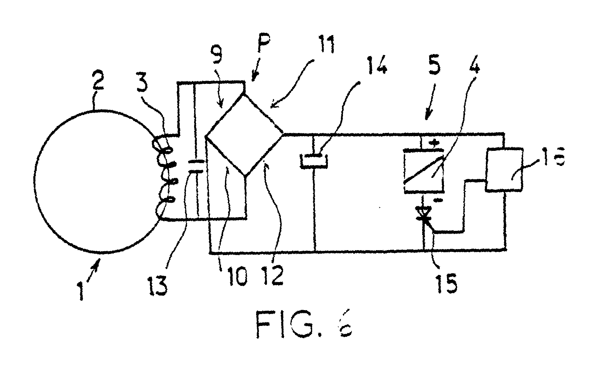

Dans la réalisation illustrée sur la figure 6, le circuit secondaire 5 comporte un condensateur d'accord 13 relié en parallèle avec l'enroulement secondaire 3 du tore 2 et avec un pont redresseur P dont les sorties sont reliées en parallèle à une capacité de stockage 14, laquelle est reliée en parallèle avec le relais 4 et un thyristor montés en série, et avec un circuit à seuil 16 comportant une sortie de contrôle reliée au thyristor 15.

Pour les deux premières réalisations illustrées sur les figures 2 et 3, le relais de déclenchement 4 commande le déclenchement du disjoncteur lorsque le signal de défaut délivré à la bobine du relais 4, lors de l'apparition d'un courant de défaut dans les enroulements primaires, dépasse un seuil prédéterminé de déclenchement. Lorsque la tension obtenue au secondaire 3 ne présente pas deux alternances symétriques, le redresseur 6, 7 réalise une symètrisation du courant au secondaire, nécessaire pour que le relais polarisé 4 fonctionne pour deux seuils symétriques.

Dans la troisième réalisation de la figure 6, le circuit à seuil 16 fournit un signal de déclenchement au relais 4 par l'intermédiaire du thyristor 15, lorsque la tension aux bornes de la capacité de stockage 14 dépasse un certain seuil.
Dans la réalisation illustrée sur la figure 2, le fonctionnement du déclencheur D avec une bonne sensibilité aux courants pulsés peut être obtenu par exemple en utilisant un nanocristallin présentant les caractéristiques magnétiques suivantes : DBdyn (100 mA t/cm) < 0,6 T, DB dyn max < 0,7 T etDBdyn/^B < 0,7.

Sur la figure 1, la courbe (a) représente la frontière normative établissant les seuils de déclenchement, en fonction de l'angle d'amorçage, conformément à la norme VDE 0664. La courbe (b) représente l'évolution des seuils en fonction de (α) lors de l'utilisation d'un matériau cristallin (comportant 78 % NI) pour le noyau magnétique du tore (2) dans un déclencheur (D) dont le circuit secondaire comporte un redresseur, tandis que la courbe (c) représente la même évolution pour une utilisation d'un matériau nanocristallin dans un même type de déclencheur.
En se reportant à la figure 1, on voit qu'une utilisation d'un matériau nanocristallin pour le noyau magnétique du tore 2 dans un circuit secondaire 5 à redresseur permet d'obtenir des seuils différentiels de déclenchement (S) en fonction de l'angle (α) d'amorçage, nettement inférieurs (courbe c) à ceux établis par la frontière normative (courbe a), et ce pour des angles d'amorçage allant jusqu'à 135°.

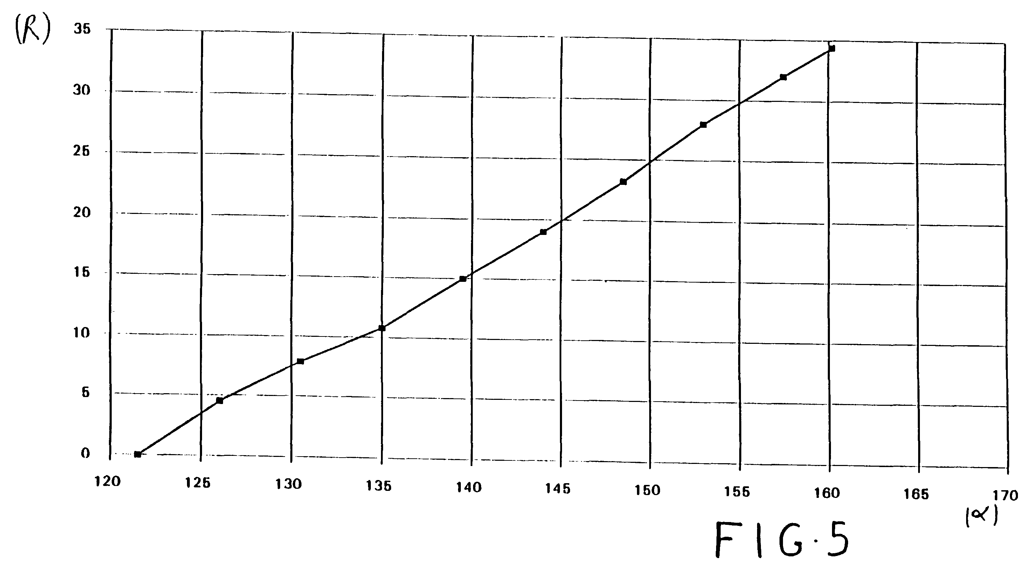

Les pertes réduites propres aux nanocristallins pouvant être mises en évidence par une mesure de DB dyn en fonction de la fréquence, permettent d'obtenir une protection différentielle à angle d'amorçage (α) élargie, comme illustré sur la figure 5. Cette courbe représente en ordonnée, la réduction des seuils (R) en %, en courants pulsés, apportée par le nanocristallin, comparativement à un cristallin comportant 55 % de NI.

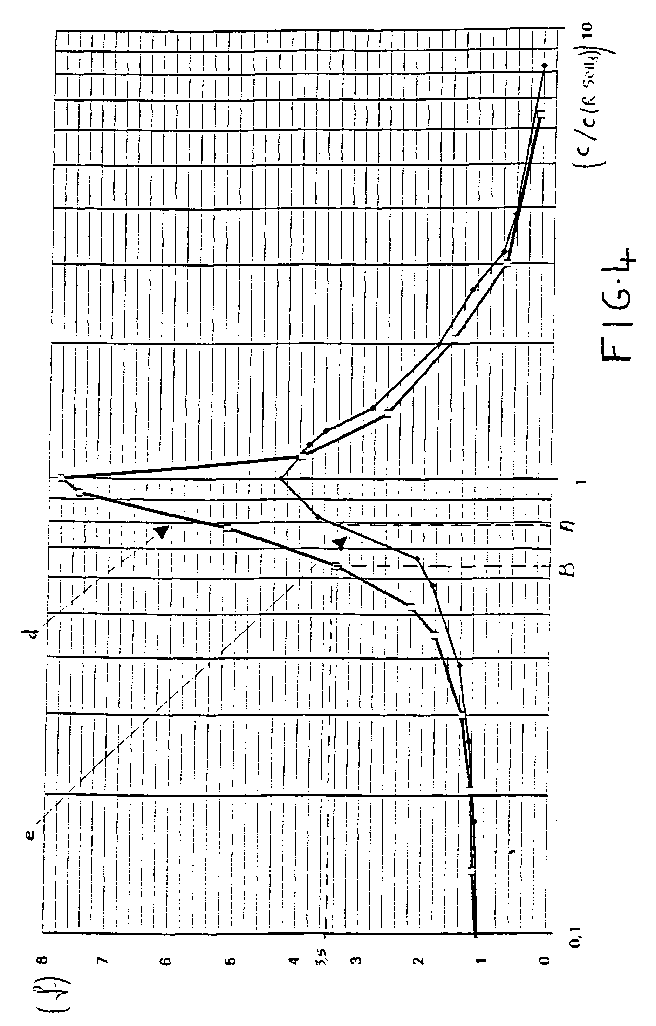

Dans la réalisation illustrée sur les figures 3 et 6, le condensateur 8 permet d'augmenter la puissance fournie au relais 4. L'utilisation du matériau nanocristallin permet de capter et de transmettre au secondaire 3 une énergie suffisante pour déclencher le relais 4. L'enroulement secondaire 3 et le condensateur 8 forment un circuit résonant dont la fréquence de résonance est choisie de façon que la surtension créée par le condensateur 8 soit environ 3,5 fois supérieure à celle occasionnée sans condensateur. On notera que, le facteur de surtension (f) est défini comme étant le rapport entre la tension du condensateur 8 à une fréquence donnée sur la tension aux bornes de l'enroulement secondaire 3, sans condensateur, pour une même fréquence. La fréquence de résonance est également choisie de façon que la bande passante du filtre comprenant le condensateur, ne coupe pas trop les harmoniques de fréquence supérieure à 50 Hz présentes dans les signaux de courants pulsés notamment pour α = 135°. Lors de l'utilisation d'un matériau cristallin, cette fréquence est en général d'environ 75 Hz.
Lorsque le matériau constituant le noyau magnétique est un matériau nanocristallin, celui-ci, grâce à ses faibles pertes, génère une surtension double de celle d'un matériau cristallin traditionnel, comme ceci est visible sur la figure 4. Les courbes d, e de cette figure 4 représentent en ordonnée le facteur de surtension f, et en abaisse le rapport entre la capacité c du condensateur et une valeur de capacité pour une résonance de 50 Hz (C, 50 Hz), respectivement pour un matériau nanocristallin (d) et pour un matériau cristallin traditionnel (e). On voit ainsi sur ces courbes que pour une valeur de coefficient de surtension de 3,5, la grandeur C/C (50 Hz) correspondante pour un nanocristallin B est inférieure à celle A du cristallin, ce qui permet de choisir une fréquence de résonance d'environ 120 Hz. Il en résulte un élargissement de la bande passante du différentiel, qui permet de réaliser une protection élargie en classe A (courants pulsés), soit pour des angles 135° < α < 180° (ces angles étant présents dans certains gradateurs).

On notera que le noyau magnétique pourra avantageusement être constitué d'un alliage à base de fer magnétique doux constitué d'au moins 50 % de cristallites d'une taille inférieure à 100 n m et contenant en pourcentage atomique : en plus d'une teneur en fer supérieure à 60 %, 0,5 à 2 % de cuivre, 2 à 5 % au moins de l'un des métaux suivants, niobium, tungstène, tantale, zirconium, hafnium, titane et/ou molybdene, 5 à 14 % de bore et 14 à 17 % de silicium.

## Revendications

1. Dispositif de protection différentielle d'une installation électrique, du genre comprenant un transformateur différentiel comportant un tore constitué par un noyau magnétique, des enroulements primaires formés par les conducteurs actifs de l'installation et un enroulement secondaire aux bornes duquel s'établit un signal de défaut différentiel lors de l'apparition d'un défaut différentiel dans les enroulements primaires, un relais de déclenchement d'un appareil de coupure du courant, et un circuit secondaire de connexion du relais aux bornes de l'enroulement secondaire précité, ledit circuit étant agencé pour provoquer le déclenchement lorsque ledit signal dépasse un seuil prédéterminé, le noyau magnétique du tore (2) étant réalisé en un matériau nanocristallin et le circuit secondaire (5) précité comportant un redresseur associé à un circuit résonnant.

2. Dispositif selon la revendication 1, caractérisé en ce que le circuit secondaire (5) comprend un redresseur (6, 7) et un condensateur (8) montés en parallèle avec l'enroulement secondaire (3) du tore, le condensateur (8) formant avec l'enroulement secondaire (3) un circuit résonnant.

3. Dispositif selon la revendication 1 ou 2, caractérisé en ce que le noyau magnétique est réalisé à partir d'un alliage à base de fer magnétique doux, composé à plus de 50% de grains à cristaux fins d'une taille inférieure à 100nm et contenant, en plus d'une teneur en fer supérieure à 60%(at), 0,5 à 2 % de cuivre, 2 à 5 % au moins de l'un des métaux suivants niobium, tungstène, tantale, zirconium, hafnium, titane et/ou molybdène, 5 à 14% de bore et 14 à 17% de silicium.

4. Dispositif selon l'une quelconque des revendications 1 à 3, caractérisé en ce que le redresseur précité comporte deux diodes (6, 7) reliant respectivement les deux extrémités de l'enroulement secondaire (3) à l'une des extrémités de la bobine du relais (4), tandis que l'autre extrémité de la bobine (4) est reliée en un point milieu (3a) de l'enroulement secondaire (3).

5. Dispositif selon la revendication 4, caractérisé en ce que les deux diodes (6, 7) sont deux diodes Zener.

6. Dispositif selon l'une quelconque des revendications 1 à 3, caractérisé en ce que le redresseur précité comporte un pont de diodes reliant les bornes de l'enroulement secondaire (3) aux bornes de la bobine du relais (4).

7. Dispositif selon l'une quelconque des revendications précédentes, caractérisé en ce que le facteur de surtension (f) du circuit secondaire (5) est d'environ 3,5.

8. Dispositif selon l'une quelconque des revendications précédentes, caractérisé en ce que la fréquence de résonance du circuit résonnant comprenant l'enroulement secondaire (3) du tore (2) et le condensateur (8), est d'environ 120 Hz.

9. Dispositif selon l'une quelconque des revendications précédentes, caractérisé en ce que le circuit secondaire (5) comporte en outre une capacité de stockage (14) et des moyens de comparaison (16), lesdits moyens étant connectés à la capacité de stockage (14) et comportant une sortie de contrôle reliée aux moyens de commande (15) du relais (4) de manière à fournir un signal de déclenchement au relais (4), si la valeur de la tension de la capacité (14) est supérieure à un seuil prédéterminé.

10. Dispositif selon la revendication 9, caractérisé en ce que les moyens de comparaison (16) comportent un comparateur.

11. Dispositif selon la revendication 9, caractérisé en ce que les moyens de comparaison (16) comportent une diode à seuil de tension.

12. Dispositif selon l'une quelconque des revendications 9 à 12, caractérisé en ce que les moyens de commande du relais (4) comportent un thyristor (15).

## Patentansprüche

1. Fehlerstromschutzeinrichtung einer elektrischen Installation, die bauartgemäß einen Differenzstromwandler mit einem als Magnetkern ausgebildeten Ring, durch die aktiven Leiter der Installation gebildeten Primärwicklungen sowie einer Sekundärwicklung, an deren Klemmen bei Auftreten eines Differenzstromfehlers in den Primärwicklungen ein Differenzstromfehlersignal anliegt, ein Auslöserelais zur Abschaltung eines elektrischen Schaltgeräts sowie eine Sekundärkreisschaltung zur Verbindung des Relais mit den Klemmen der genannten Sekundärwicklung umfaßt, wobei die genannte Schaltung dazu dient, bei Überschreitung eines festgelegten Schwellwerts durch das genannte Signal eine Auslösung zu bewirken, der Magnetkern des Rings (2) aus einem nanokristallinen Werkstoff besteht und die genannte Sekundärkreisschaltung (5) einen Gleichrichter umfaßt, der einem Resonanzkreis zugeordnet ist.

2. Einrichtung nach Anspruch 1, dadurch gekennzeichnet, daß die Sekundärkreisschaltung (5) einen Gleichrichter (6, 7) und einen Kondensator (8) umfaßt, die parallel zur Sekundärwicklung (3) des Ringwandlers geschaltet sind, wobei der Kondensator (8) mit der Sekundärwicklung (3) einen Resonanzkreis bildet.

3. Einrichtung nach Anspruch 1 oder 2, dadurch gekennzeichnet, daß der Magnetkern aus einer magnetischen Weicheisenlegierung besteht, die sich zu über 50 % aus Feinkristalliten einer Größe von < 100 nm zusammensetzt und neben einem Eisenanteil von über 60 % (at), 0,5 bis 2 % Kupfer, mindestens 2 bis 5% eines der Metalle Niob, Wolfram, Tantal, Zirkon, Hafnium, Titan und/oder Molybdän, sowie 5 bis 14% Bor und 14 bis 17% Silizium enthält.

4. Einrichtung nach irgendeinem der Ansprüche 1 bis 3, dadurch gekennzeichnet, daß der genannte Gleichrichter zwei Dioden (6, 7) umfaßt, die die beiden Enden der Sekundärwicklung (3) mit dem einen Ende der Relaisspule (4) verbinden, wobei das andere Ende der Spule (4) mit einem Mittelabgriff (3a) der Sekundärwicklung (3) verbunden ist.

5. Einrichtung nach Anspruch 4, dadurch gekennzeichnet, daß die beiden Dioden (6, 7) als Zenerdioden ausgebildet sind.

6. Einrichtung nach irgendeinem der Ansprüche 1 bis 3, dadurch gekennzeichnet, daß der genannte Gleichrichter eine Diodenbrücke umfaßt, die die Klemmen der Sekundärwicklung (3) mit den Klemmen der Relaisspule (4) verbindet.

7. Einrichtung nach irgendeinem der vorhergehenden Ansprüche, dadurch gekennzeichnet, daß der Gütefaktor (f) der Sekundärkreisschaltung (5) etwa 3,5 beträgt.

8. Einrichtung nach irgendeinem der vorhergehenden Ansprüche, dadurch gekennzeichnet, daß die Resonanzfrequenz des durch die Sekundärwicklung (3) des Ringkerns (2) und den Kondensator (8) gebildeten Schwingkreises etwa 120 Hz beträgt.

9. Einrichtung nach irgendeinem der vorhergehenden Ansprüche, dadurch gekennzeichnet, daß die Sekundärkreisschaltung (5) zusätzlich eine Speicherkapazität (14) sowie Vergleichsmittel (16) umfaßt, welche Mittel an die Speicherkapazität (14) angeschlossen sind und einen an die Mittel (15) zur Ansteuerung des Relais (4) angeschlossenen Steuerausgang aufweisen, derart daß das Relais (4) mit einem Auslösesignal beaufschlagt wird, wenn die Spannung der Speicherkapazität (14) einen festgelegten Schwellwert überschreitet.

10. Einrichtung nach Anspruch 9, dadurch gekennzeichnet, daß die Vergleichsmittel (16) einen Komparator umfassen.

11. Einrichtung nach Anspruch 9, dadurch gekennzeichnet, daß die Vergleichsmittel (16) eine Spannungsschwellwertdiode umfassen.

12. Einrichtung nach einem der Ansprüche 9 bis 12, dadurch gekennzeichnet, daß die Mittel zur Ansteuerung des Relais (4) einen Thyristor (15) umfassen.

## Claims

1. A device for differential protection of an electrical installation, of the kind comprising a differential transformer comprising a toroid formed by a magnetic core, primary windings formed by the active conductors of the installation and a secondary winding at the terminals of which a differential fault signal is established when a differential fault occurs in the primary windings, a trip relay for tripping a switchgear apparatus, and a secondary circuit connecting the relay to the terminals of the above-mentioned secondary winding, said circuit being arranged to bring about tripping when said signal exceeds a preset threshold, the magnetic core of the toroid (2) being made of nanocrystalline material and the above-mentioned secondary circuit (5) comprising a rectifier associated to a resonant circuit.

2. The device according to claim 1, characterized in that the secondary circuit (5) comprises a rectifier (6, 7) and a capacitor (8) connected in parallel with the secondary winding (3) of the toroid, the capacitor (8) forming a resonant circuit with the secondary winding (3).

3. The device according to claim 1 or 2, characterized in that the magnetic core is made from a soft magnetic iron-based alloy, composed of more than 50% of fine crystal grains of a size smaller than 100 nm and containing, in addition to an iron content greater than 60%(at), 0.5 to 2% of copper, at least 2 to 5% of one of the following metals: niobium, tungsten, tantalum, zirconium, hafnium, titanium and/or molybdenum, 5 to 14% of boron and 14 to 17% of silicon.

4. The device according to any one of the claims 1 to 3, characterized in that the above-mentioned rectifier comprises two diodes (6, 7) respectively connecting the two ends of the secondary winding (3) to one of the ends of the coil of the relay (4), whereas the other end of the coil (4) is connected to a mid-point (3a) of the secondary winding (3).

5. The device according to claim 4, characterized in that the two diodes (6, 7) are two Zener diodes.

6. The device according to any one of the claims 1 to 3, characterized in that the above-mentioned rectifier comprises a diode bridge connecting the terminals of the secondary winding (3) to the terminals of the coil of the relay (4).

7. The device according to any one of the foregoing claims, characterized in that the overvoltage factor (f) of the secondary circuit (5) is about 3.5.

8. The device according to any one of the foregoing claims, characterized in that the frequency of resonance of the resonant circuit comprising the secondary winding (3) of the toroid (2) and the capacitor (8) is about 120 Hz.

9. The device according to any one of the foregoing claims, characterized in that the secondary circuit (5) comprises in addition a storage capacity (14) and means for comparison (16), said means being connected to the storage capacity (14) and comprising a monitoring output connected to the control means (15) of the relay (4) so as to supply a tripping signal to the relay (4) if the voltage value of the capacity (14) is greater than a preset threshold.

10. The device according to claim 9, characterized in that the means for comparison (16) comprise a comparator.

11. The device according to claim 9, characterized in that the means for comparison (16) comprise a voltage threshold diode.

12. The device according to any one of the claims 9 to 11, characterized in that the control means of the relay (4) comprise a thyristor (15).
